# EUROPEAN PATENT SPECIFICATION

(11) **EP 2 488 015 B1**
(45) Date of publication and mention of the grant of the patent: **20.11.2013**
(21) Application number: 10765583.9
(22) Date of filing: 06.10.2010
(51) Int. Cl.: A01N 25/24, A01C 1/06, A01N 25/00

(54) **FUZZY COTTON SEEDS COMPRISING AN AQUEOUS POLYURETHANE COATING**
FLOCKIGE BAUMWOLLSAMEN MIT WÄSSRIGER POLYURETHANBESCHICHTUNG
GRAINES DE COTON VELUES COMPORTANT UN ENROBAGE DE POLYURÉTHANE AQUEUX

(30) Priority: 13.10.2009 US 251114 P
(43) Date of publication of application: 22.08.2012
(73) Proprietor: Bayer Cropscience LP, Research Triangle Park, NC 27709 (US)
(72) Inventor: DÖRR, Sebastian, 40597 Düsseldorf (DE); SEEWALD, Eric, NL-6211 JB Maastricht (NL); BREGGER, Thomas, Wake Forest, NC 27587 (US)
(74) Representative: Desomer, Jan G.M.
(86) International application number: PCT/EP2010/006161
(87) International publication number: WO 2011/045004

(56) References cited:
- US-A- 5 750 466

## Description

### Field of the invention

The present invention relates to the preparation of coated cotton seeds, in particular to the coating of fuzzy cotton seeds. Hitherto, aqueous polyurethanes are used to produce coated fuzzy cotton seeds. The resulting coated fuzzy seeds have a smooth surface, are easy in handling and adapted to mechanical sowing machinery thereby shortening the sowing time and saving labor for thinning.

### Background of the invention

Cotton seed is used widely for oil extraction, cattle feed and replanting. Cotton seed handling, processing, coating and planting requires free flowing regular uniform seeds. The cotton seed obtained after the removal of cotton fiber is termed fuzzy seed because of the residual lint still on the seed. Fuzzy seed does not flow freely and tends to clump together and causes difficulties in handling with traditional feed-grain handling or sowing equipment. Therefore delinted cotton seed still requires extensive further processing to facilitate efficient handling of the fuzzy cotton seeds (which are sometimes designated as 'sticky seeds'). In the following paragraphs the solutions of the prior art to process fuzzy cotton seed are briefly discussed.

Mechanical methods have been used to remove the fuzzy fibers from cotton seeds such as saw delinting (US5249335) or by mixing the seed with abrasive particles (WO05028090). However, these mechanical methods do not remove all fuzz fibers and suffer from damaging the cotton seed thereby reducing viability. Various chemical delinting processes using hazardous acids such as sulphuric acid (e.g. US4371449, US4216616) or hydrochloric acid (US5632116), do remove all fuzz, but not only considerable energy is required, the acids are highly corrosive and therefore the whole process is not environmentally friendly. Also, seed viability may be significantly reduced and the so produced 'black seed' cannot be used for feed, only for planting. Alternatively, flame delinting (flame zipping) is a process where mechanically delinted seed is dropped through an intense flame to singe or burn off loose linters (US 4203254). Since the seed is heated by passing through the flame, the potential of causing heat damage to the seed is extremely likely.

As an alternative the fuzzy fibers on cotton seeds are not removed and the fuzzy fibers are coated to produce a flowable product. US181136 describes coating cottonseed for planting with soluble silicates, basically forming a glue to stick the fibers to the seed coat.

Starch-coated cottonseed for use as feed is described in US5750466, later made commercially available by Cotton Incorporated under the name EasiFlo^{®}. When testing for seeding purposes however, these seeds performed significantly worse in germination tests compared to acid delinted seeds, possibly due to the thickness of the coating or excessive heating during the application of the coating. Furthermore, problems with the flowability of the seed when attempting to plant it with modern planting equipment were also observed.

In US5787640 fuzzy cottonseeds are coated with a guar to produce flowable seed for planting. However, a minimum amount of guar/water is needed to prevent cotton seed clustering, while a too high guar concentration makes it difficult to evenly apply it to the seed. Also, the optimum percentage of coating may vary from as much as 10-80% of the seed weight.

Flowable cottonseeds for use as feed or planting and with a coating consisting of a combination of three types of substances; a liquid feed product and metal compound interacting with a phosphorous source or organic acids, are described in US6824788 and US7001623 respectively. This coating requires drying to avoid stickiness, a process which is time and temperature dependent. Furthermore, the coating comprises as much as 15-60 % of the seed weight.

Coating of seed with a polymeric-pesticide film for slow pesticide release is disclosed in US3911183, in which an additional step is required for delinting cottonseed prior to coating.

Brooker et al (2007) Commun. Agric. Appl. Biol. Sci. 72(2): 35-43 disclose the use of polyurethanes prepared from vegetable oils for coating of soybean seeds. It was observed that the seed coating can enhance the germination and survival of the soybean seeds under adverse environmental conditions.

WO 01/78507 discloses the use of mixtures of polyurethanes and polyvinylalcohols as coating components for the controlled release of an agricultural active ingredient for rice seeds but the surface of rice seeds are coated after the rice seed is deprived of husk.

There still remains a need for an alternative method for fuzzy cotton seed coating that results in a better flowing of the coated seeds which can be efficiently used for planting purposes. The coating should be non-toxic and at the same time sufficiently smooth and hard without encumbering the germination efficiency of the coated fuzzy seeds, while being applied in low enough quantities not to significantly change the weight of the seed such that separation of viable seeds from unviable seeds and debris on conventional shaker tables is possible. The current invention provides methods and means to produce coated fuzzy cotton seeds as will become apparent from the following description, examples and claims provided herein.

### Summary of the invention

The present invention provides for a process for coating of fuzzy cotton seeds with aqueous polyurethane dispersions. The coated fuzzy cotton seeds obtained by the process have a smooth and hard surface. The coating does not cause any damage to the coated fuzzy cotton seeds, the coated fuzzy seed can be used in machinery (e.g. planting machinery) similar to the machinery used for the handling of black seed. The coating process leads to free flowing regular and uniform coated fuzzy cotton seeds. The coated viable seed can be separated from unviable seeds and debris using conventional methods.

Thus it is one object of the invention to provide a fuzzy cotton seed with a coating of an aqueous polyurethane dispersion.

In a specific aspect the aqueous polyurethane dispersion has specific film parameters with a tensile strength between 25-150 MPa and a 100% modulus of 3-30 MPa (Film parameters: film based on the aqueous polyurethane dispersion, prepared with a coating knife and drying).

In yet another specific aspect the aqueous polyurethane dispersion has specific film parameters with a tensile strength between 35-70 MPa and a 100% modulus of 4-20 MPa.

In yet another object the invention provides a fuzzy cotton seed with an aqueous polyurethane dispersion coating, wherein said dispersion consists of aliphatic isocyanates and polyols.

In yet another object the invention provides a fuzzy cotton seed with an aqueous polyurethane dispersion coating, wherein said dispersion does not contain groups based on aromatic isocyanates.

In yet another object the invention provides a fuzzy cotton seed with an aqueous polyurethane dispersion coating, wherein said dispersion consists of polyols containing ester groups.

In a further object the invention provides a fuzzy cotton seed wherein said aqueous polyurethane dispersion can be biodegradable.

In another object the invention provides a fuzzy cotton seed comprising aqueous polyurethane dispersions as herein described before further comprising an agricultural chemical.

In specific objects these agricultural chemical is selected from the list consisting of fungicidal agents, bacterial agents, insecticidal agents and/or nematicidal agents.

It is another aspect to provide for fuzzy cotton seeds comprising aqueous polyurethane dispersions further comprising a coloring agent selected from the list of dyes and pigments It is another object to provide for fuzzy cotton seeds comprising aqueous polyurethane dispersions further comprising a coloring agent and further comprising an agricultural chemical.

It is another object to provide for a process for coating fuzzy cotton seeds comprising the steps of a) applying an aqueous polyurethane dispersion to said cotton seeds, b) removing the excess of aqueous polyurethane dispersion and c) drying the seeds under constant motion and thereby obtaining coated fuzzy cotton seeds with a hard surface.

It is another object to provide for a process for coating fuzzy cotton seeds comprising the steps of a) applying an emulsifier or surfactant solution to said seeds, b) applying an aqueous polyurethane dispersion to said cotton seeds, c) removing the excess of aqueous polyurethane dispersion and d) drying the seeds under constant motion for at least some time and thereby obtaining coated fuzzy cotton seeds.

It is another object to provide for a process for coating fuzzy cotton seeds with an aqueous polyurethane dispersion as herein described before wherein the specific film parameters of the aqueous polyurethane dispersions are 25 to 150 MPa for the tensile strength and 3 to 30 MPa for 100% modulus and more preferably wherein the specific film parameters of the aqueous polyurethane dispersions are 35 to 70 MPa for the tensile strength and 4 to 20 MPa for 100% modulus.

It is another object to provide for a process as described herein before wherein an agricultural agent is further added to the coated fuzzy cotton seeds.

It is another object to provide for a process as described herein before wherein a coloring agent or a coloring agent and an agricultural agent are further added to the coated fuzzy cotton seeds.

It is another object to use the coated fuzzy cotton seeds as described herein before for planting, growing cotton plants and harvesting cotton fibers.

It is another object to use the coated fuzzy cotton seeds as described herein before for feeding purposes.

It is another object to control the residence time in the aqueous dispersion to increase the moisture content of the seed to initiate and drive seed germination such that the partially germinated seeds planted in the field will sprout more rapidly in the field.

### Detailed description of the invention

One of the major uses of cotton seed is for planting and reproduction purposes. Over the years, from the time cotton was first mechanically planted, farmers have had to contend with the short fuzz or lint that remains on the cotton seed after ginning, thus making the seed difficult to plant through a mechanical planter. The present invention is based on the surprising finding that fuzzy cotton seeds can be efficiently coated with aqueous polyurethane dispersions. The resulting polyurethane coating is excellent in surface hardness and in disintegration characteristics in the soil after sowing and allows for penetration of sprouts and roots during germination. Germination and subsequent growth of the fuzzy cotton seeds is not affected by the coating with the aqueous polyurethane dispersion. The coating results in fuzzy cotton seeds with a sufficiently smooth and hard surface so that the coated fuzzy cotton seeds can flow freely and can be efficiently used with the existing machinery used for planting purposes as is currently used for the processing of black seed (i.e. fuzzy cotton seed treated with the acid delinting process). It should be said that a polymer coating does not immediately lead to smooth surfaces since many polymers result in sticky coatings when dried. It should also be said that the coating of the coated fuzzy cotton seeds should be sufficiently hard to allow the use by mechanical planting machinery but the coating should at the same time not inhibit the germination frequency of the coated fuzzy cotton seeds as compared to the germination of fuzzy cotton seeds which are not coated. Preferably the germination efficiency of polyurethane coated fuzzy cotton seeds should be better than the germination of acid delinted fuzzy cotton seeds. Preferably the germination should be better than 10%, 20%, 30%, 40%, 50%, 60%, 70%, 80%, 90% or even be better than 100%.

In a first embodiment the invention relates to fuzzy cotton seeds with a coating of an aqueous polyurethane polymer dispersion. Said coating results in the sticking of the fuzz fibers present on the fuzzy cotton seeds, thereby resulting in free flowable coated fuzzy cotton seed similar to acid delinted black cotton seed.

As used herein polyurethane is an addition product of at least one polyisocyanate component and at least one polyol component. The polyisocyanate component generally comprises at least one diisocyanate. The isocyanate component may additionally also comprise isocyanates of higher functionality, for example triisocyanates or oligomeric isocyanates having on average more than two and preferably three or more isocyanate groups. The polyol component generally comprises at least one diol. The polyol component may further comprise higher-functionality polyols or oligomeric polyols having on average more than two OH groups, preferably three, four or more OH groups. The polyurethane can additionally contain urea groups based on the reaction of amines with isocyanates.

In the last several years, aqueous based-polyurethane dispersions are becoming increasingly used in a variety of applications such as, but not limited to, ink, surface coatings such as roof, floor, flexible, plastic, and specialty coatings, and adhesives. The prior art provides many examples of aqueous-based polyurethane dispersions and methods for making same such as, but not limited to, U.S. Pat. Nos. 4,528,323; 4,871,798; 5,124,400; 5,270,433; 5,432,228; 5,494,960; 5,576,382; 5,616,400; 5,703,158; 5,981,650; and 6,433,073.

Aqueous polyurethane coatings are water based dispersions that have outstanding performance properties and are environmentally friendly, containing no volatile organic compounds making them highly suitable in several coating applications (e.g. high tech aerospace and automotive coating applications). Aqueous polyurethane dispersions are made in at least two stages: the prepolymer formation and the dispersion formation. In the first stage, an isocyanate terminated prepolymer is prepared by combining chemical reactants including at least one isocyanate reactive compound capable of imparting some hydrophilicity to the material, neutralizing the isocyanate reactive group with a neutralizing agent having a suitable organic counter ion, and optionally reacting at least a portion of the isocyanate end groups of the isocyanate terminated prepolymer with a chain terminating agent. In the second stage, the aqueous polyurethane dispersion is prepared by dispersing the prepolymer in water to provide an aqueous-based dispersion, and chain extending the prepolymer with a chain extending agent. The molecular weight of polyurethane polymer contained within the aqueous polyurethane dispersion may be controlled by adding at least one chain terminating agent to the reaction mixture and/or monitoring the amount of amine from the neutralizing agent to acid functional groups from the isocyanate reactive compound. The isocyanate terminated prepolymer is prepared from a reaction mixture comprising at least one diisocyanate, at least one difunctional polyol, at least one isocyanate reactive compound, a neutralizing agent, optionally a chain terminating agent, optionally a catalyst, and optionally a solvent. The reaction occurs using a stoichiometric excess of the at least one diisocyanate relative to the at least one difunctional polyol and the at least one isocyanate reactive compound to produce an oligomer which may contain urethane and urea functional groups.

An essential element of the invention is that the dispersions when dried, are hard and non-tacky (i.e. non-sticky but smooth), but at the same time still allow the seed to germinate. Preferably, the dispersion has specific film parameters comprising a tensile strength of 25-150 MPa (megapascals) and a 100% modulus of 3-30 MPa. Even more preferably the specific film parameters are a tensile strength of 35-70 MPa and a 100% modulus of 4-20 MPa. Tensile strength is the force placed on the sample divided by the cross-sectional area of the sample, tensile strength is measured in units of force divided by units of area, usually N/cm², tensile strength can also be measured in psi (1 N/cm² = 1.45 psi). Ultimate tensile strength is the force needed to stretch a material until it breaks. Strength can also be measured in megapascals (MPa). The conversion is 1 MPa = 100 N/cm². The modulus is a measure how well a certain material resists deformation. 100% modulus is the force needed to stretch the material to twice its original dimensions.

In a particular preferred embodiment the aqueous polyurethane dispersion used for coating fuzzy seed is a dispersion of Impranil® DLH. The latter aqueous polyurethane is an anionic aliphatic polyester-polyurethane dispersion. Impranil® DLH is suitable for the formulation of textile coatings and also for coating and finishing of various technical articles such as outer wear, bags, luggage, fashion shoe leather uppers, belts, hoses, glass fabrics and fabrics made from synthetic fibers. Impranil® DLH has thus far never been considered for seed coating purposes.

In yet another particular embodiment the aqueous polyurethane dispersion used for coating fuzzy seed is a dispersion of Impranil® XP 2611. The latter aqueous polyurethane is an anionic aliphatic polyester-polyurethane dispersion. Impranil® XP 2611 is suitable for the formulation of textile coatings and also for coating and finishing of various technical articles such as outer wear, bags, luggage, fashion shoe leather uppers and the like. Impranil® XP 2611 has thus far never been considered for seed coating purposes.

According to another embodiment of the invention, the aqueous polyurethane dispersion consists of aliphatic isocyanates and polyols.

In another embodiment the coating of the invention may comprise an agricultural chemical like biocides, such as fungicidal agents and/or an bactericidal agent, and/or an insecticidal agent and/or nematicidal agents, specific examples of which can be found in US20040025208 (paragraphs 34-40).

A non-limiting list of cotton herbicides which can be further incorporated in the fuzzy cotton seeds coated with aqueous polyurethane dispersions is Diuron, Fluometuron, MSMA, Oxyfluorfen, Prometryn, Trifluralin, Carfentrazone, Clethodim, Fluazifop-butyl, Glyphosate, Norflurazon, Pendimethalin, Pyrithiobac-sodium, Trifloxysulfuron, Tepraloxydim, Glufosinate, Flumioxazin and Thidiazuron. A non-limiting list of cotton insecticides which can be further incorporated in the fuzzy cotton seeds coated with aqueous polyurethane dispersions is Acephate, Aldicarb, Chlorpyrifos, Cypermethrin, Deltamethrin, Malathion, Monocrotophos, Abamectin, Acetamiprid, Emamectin Benzoate, Imidacloprid, Indoxacarb, Lambda-Cyhalothrin, Spinosad, Thiodicarb, Gamma-Cyhalothrin, Spiromesifen, Pyridalyl, Flonicamid, Flubendiamide, Triflumuron,Rynaxypyr,Beta-Cyfluthrin,Spirotetramat, Clothianidin, Thiamethoxam, Thiacloprid, Dinetofuran, Flubendiamide, Cyazypyr, Spinosad, Spinotoram, gamma Cyhalothrin, 4-[[(6-Chlorpyridin-3-yl)methyl](2,2-difluorethyl)amino]furan-2(5H)-on, Thiodicarb, Avermectin, Flonicamid, Pyridalyl, Spiromesifen, Sulfoxaflor, Profenophos, Thriazophos and Endosulfan. A non-limiting list of cotton fungicides which can be further incorporated in the fuzzy cotton seeds coated with aqueous polyurethane dispersions is Etridiazole, Metalaxyl and Quintozene. A non-limiting list of cotton nematicides which can be further incorporated in the fuzzy cotton seeds coated with aqueous polyurethane dispersions is abamectin, aldicarb, carbofuran, carbosulfan, oxamyl, aldoxycarb, ethoprop benomyl, alanycarb, henamiphos, fenamiphos, fensulfothion, terbufos, fosthiazate, dimethoate, phosphocarb, dichlofenthion, isamidofos, fosthietan, isazofos ethoprophos, cadusafos, terbufos, chlorpyrifos, dichlofenthion, heterophos, isamidofos, mecarphon, phorate, thionazin, triazophos, diamidafos, fosthietan, phosphamidon, captan and thiabendazole.

In specific embodiments at least one herbicide and/or at least one insecticide and/or at least one fungicide and/or at least one nematicide are combined and further added in a coating of fuzzy cotton seed coated with an aqueous polyurethane dispersion.

In yet another embodiment the coating of the invention may comprise a coloring agent. A coloring agent, such as a dye is required by certain laws in the seed coating process so that an observer can immediately determine that the seeds are treated or that the seeds are genetically modified. The dye is also useful to indicate to the user the degree of uniformity of the coating applied (see for example US4272417).

The coloring agents are selected from the class comprising dyes, pigments, and lakes. Particular coloring agents which can be used include methyl violet 4PBX, Direct Red 81, Fuchsine RTN New Powder, Acid Red 73, Rhodamine B-500, Calco oil yellowEM, Calcocid Tartrazine Double Conc, Calcocid Green SG, Red Lake C, Calcocid Blue 2G, Tint-Ayd Pern., Organic Scarlet, Tenneco 895-000-72 Phthalo Blue Aqueous Industrial Colorant, Tenneco 895-000-0401 Quinacridone Red Aqueous Industrial Colorant (US4272417).

It is understood that at least one coloring agent can be incorporated in combination with at least one herbicide and/or at least one insecticide and/or at least one fungicide and/or at least one nematicide are combined and further added in the coated fuzzy cotton seed coated with an aqueous polyurethane dispersion.

In a specific embodiment the process for coating fuzzy cotton seeds of the invention can be applied for the coating of seed derived from plants containing transformation events, or combination of transformation events, that may be the subject of petitions for non-regulated status, in the United States of America, to the Animal and Plant Health Inspection Service (APHIS) of the United States Department of Agriculture (USDA) whether such petitions are granted or are still pending, including the events depicted in Table 2.

**Table 2: list of cotton events subject to petitions for de-regulated status in the United States**

| **Transformation event** | **Petition** | **Transgenic phenotype** |
|---|---|---|
| COT67B | 07-108-01p | leptidopteran resistant |
| GHB614 | 06-332-01p | glyphosate tolerant |
| MON88913 | 04-086-01p | glyphosate tolerant |
| COT102 | 03-155-01p | lepidopteran resistant |
| 281-24-236 | 03-036-01p | lepidopteran resistant |
| 3006-210-23 | 03-036-02p | lepidopteran resistant |
| LLCotton25 | 02-042-01p | phosphinotricin tolerant |
| MON 15985 | 00-342-01p | lepidopteran resistant |
| 31807&31808 | 97-013-01p | bromoxynil tolerant & lepidopteran resistant |
| 19-51a | 95-256-01p | Sufonylurea tolerant |
| MON 1445, 1698 | 95-045-01p | glyphosate tolerant |
| MON 531,757,1076 | 94-308-01p | lepidopteran resistant |
| BXN | 93-196-01p | bromoxynil tolerant |

Additionally, the method for coating can be applied for the events disclosed in the following patent applications depicted in Table 3.

**Table 3: List of patent applications comprising specific cotton events**

| **Event name** | **Phenotype** | **Patent application** |
|---|---|---|
| CE43-67B | Insect resistance (Cry1Ab) | WO2006/128573 |
| CE46-02A | Insect resistance (Cry1Ab) | WO2006/128572 |
| CE44-69D | Insect resistance (Cry1Ab) | WO2006/128571 |
| 1143-14A | Insect resistance (Cry1Ab) | WO2006/128569 |
| T342-142 | Insect resistance (Cry1Ab) | WO2006/128568 |
| event3006-210-23 | Insect resistance (Cry1 Ac) | WO2005103266 |
| PV-GHGT07 (1445) | Glyphosate tolerance | US2004-148666 |
| MON88913 | Glyphosate tolerance | WO2004/072235 |
| EE-GH3 | Glyphosate tolerance | WO2007/017186 |
| T303-40 | Insect-resistance | PCT/EP2008/002667 |
| GHB119 | Insect-resistance | PCT/EP2008/004652 |
| Cot202 | Insect resistance (VIP3) | US2007-067868 |
| LLcotton25 | Glufosinate resistance | WO2007/017186 |
| event 281-24-236 | Insect resistance (Cry1F) | WO2005103266 |
| Cot102 | Insect resistance (Vip3A) | US2006-130175 |
| MON15985 | Insect resistance | US2004-250317 |

A preferred aspect of the invention is that the coated fuzzy seeds easily disintegrate by moisture in the soil. It has been shown that Impranil DLN® (an aqueous polyurethane dispersion) is biodegradable because it contains a significant polyester component being degradable through hydrolysis and by lipases present in the soil.

In yet another embodiment the invention provides for a process for the coating of fuzzy cotton seeds, said process comprising the steps of 1) applying an emulsifier solution to said seeds, 2) applying an aqueous polyurethane dispersion, to said seeds, 3) removing the excess of aqueous polyurethane dispersion and 4) drying the seeds under constant motion.
Emulsifier solutions are known to a person skilled in the art in polymer science. Aqueous emulsifier solutions are preferred.

In yet another embodiment the invention provides for a process for the coating of fuzzy cotton seeds, said process comprising the steps of 1) applying an aqueous polyurethane dispersion, to said seeds, 2) removing the excess of aqueous polyurethane dispersion and 3) drying the seeds under constant motion.

It is understood that the drying of the seeds has to carried out at temperatures and durations which are not damaging for the seeds so that germination properties are not inhibited. The person skilled in the art knows the specific range of temperatures which can be used for the drying process of the coated fuzzy cotton seeds.

In yet another embodiment the invention provides for a process with or without the application of an aqueous emulsifier wherein the aqueous polyurethane dispersions are 25 to 150MPa for the tensile strength and 3 to 30 MPa for 100% modulus.

In yet another embodiment the invention provides for a process with or without the application of an aqueous emulsifier wherein the specific film parameters of the aqueous polyurethane dispersions are 35 to 70MPa for the tensile strength and 4 to 20 MPa for 100% modulus.

In a particular embodiment said aqueous polyurethane dispersion is Impranil® DLH.

In yet another particular embodiment said aqueous polyurethane dispersion is Impranil® XP 2611.

In another particular embodiment the coating process comprises the addition of at least one agricultural agent selected from the list consisting of nematicides, fungicides, microbicides, fungicides and/or herbicides.

In a specific aspect of the coating process the fuzzy cotton seeds are maintained in a hot water bath for a certain amount of time until the initiation of germination occurs. Immediately after the germination the fuzzy cotton seeds are subjected to a coating with an aqueous polyurethane dispersion in order to freeze the coated fuzzy cotton seeds in the initial germination phases and the coated seeds are stored before they are planted. The advantage of this process is that when these pre-germinated coated fuzzy cotton seeds are planted, the germination and emergence is faster and is uniform.

In yet another embodiment the aqueous polyurethane coated fuzzy cotton seeds are used for planting purposes. Planting can be carried out by mechanical planting devices which are known in the art of sowing.

### Examples

### Example 1: Wetting of the fuzzy seeds with an emulsifier solution

Optionally fuzzy seeds can be pre-treated with an emulsifier solution before the treatment with an aqueous polyurethane dispersion. Thereto, as a non-limiting example in 130g water, 0.3g of the bio-based emulsifier Plantacare 2000 UP (Cognis) was dissolved. Subsequently, 100 seeds (-10g, AFD 5064F) were added to the solution and stirred for 5 minutes, until the seeds were completely moistened.

### Example 2: Application of an aqueous polyurethane dispersion

To 100 fuzzy cotton seeds, optionally pre-wetted with an emulsifier solution as exemplified in non-limiting example 1, approximately 19g of an aqueous polyurethane dispersion (~40% in water) was added, resulting in a final polyurethane concentration of about 5%. The mixture was stirred for an additional 5 minutes, after which the surplus of dispersion was removed by filtering through a sieve on a mechanical shaker. Subsequently, seeds were dried under constant motion finally resulting in fuzzy seeds with an aqueous polyurethane coating.

Alternatively the aqueous polyurethane dispersion can be added to fuzzy seeds without pre-wetting the seeds with an emulsifier solution.

All steps described in example 1 and 2 can be performed at room temperature but it the skilled person knows that higher temperatures can be used, especially for the drying step of the fuzzy seeds.

It is important that the aqueous polyurethane dispersion (about 40% in water) forms a film around the fuzzy seeds but the films should at the same time be hard and non tacky. This can be embodied by high tensile strength (DIN 53504) or 100% modulus (DIN 53504) of films based on the dispersions. Two non-limiting examples of aqueous polyurethanes which have been successfully used for coating fuzzy seeds are Impranil DLH (tensile strength: 60 MPa; 100% modulus: 5 MPa) and Impranil XP2611 (tensile strength: 40 MPa; 100% modulus: 13 MPa).

### Example 3: Germination efficiency of coated fuzzy cotton seeds

Per treatment the germination percentage of the seeds was determined (table 1). For comparison, also black breeder seeds (fibers removed by hydrochloric acid) were evaluated (coated and uncoated).

**Table 1: germination efficiency of coated and uncoated fuzzy cotton seeds compared to the germination efficiency of coated and uncoated black seeds of cotton.**

| | Fuzzy seeds | Black seeds |
|---|---|---|
| Uncoated | 100% | 80% |
| Impranil^{®} DLH (0.3g) | 60% | 60% |
| Impranil^{®}XP 2611 (0.57g) | 100% | 60% |

Table 1 shows that the coating of fuzzy cotton seeds with Impranil® DLH leads to a comparable germination efficiency of the germination of black cotton seeds. The coating of fuzzy cotton seeds with Impranil® 2611 does not lead to a loss of germination efficiency in particular with respect to the germination efficiency of black cotton seeds.

## Claims

1. A fuzzy cotton seed coated with an aqueous polyurethane dispersion.

2. A fuzzy cotton seed according to claim 1, wherein the specific film parameters of the aqueous polyurethane dispersions are 25 to 150 MPa for the tensile strength and 3 to 30 MPa for 100% modulus.

3. A fuzzy cotton seed according to claim 1, wherein the specific film parameters of the aqueous polyurethane dispersions are 35 to 70 MPa for the tensile strength and 4 to 20 MPa for 100% modulus.

4. A fuzzy cotton seed according to any one of claims 1 to 3, wherein said aqueous polyurethane dispersion consists of aliphatic isocyanates and polyols.

5. A fuzzy cotton seed according to any one of claims 1 to 4, wherein said polyurethane polymer is biodegradable.

6. A fuzzy cotton seed according to any one of claims 1 to 5, further comprising an agricultural chemical.

7. A fuzzy cotton seed according to claim 6, wherein said agricultural chemical is selected from the group consisting of fungicidal agents, bactericidal agents, insecticidal agents and/or nematicidal agents.

8. A fuzzy cotton seed according to any one of claims 1 to 7, further comprising a coloring agent selected from the group consisting of dyes, pigments, and lakes.

9. A process for coating fuzzy cotton seeds, comprising the steps of
a. applying an aqueous polyurethane dispersion to said seeds;
b. removing the excess of aqueous polyurethane dispersion;
c. drying the seeds under constant motion until a rigid film and surface is obtained.

10. A process according to claim 9, further comprising prior to step a. the step of applying an emulsifier solution to said seeds.

11. A process according to claims 9 or 10 wherein the specific film parameters of the aqueous polyurethane dispersions are 25 to 150MPa for the tensile strength and 3 to 30 MPa for 100% modulus.

12. A process according to claims 9 or 10 wherein the specific film parameters of the aqueous polyurethane dispersions are 35 to 70MPa for the tensile strength and 4 to 20 MPa for 100% modulus.

13. A process according to any one of claims 9 to 12 further comprising the addition of an agricultural agent.

14. A process according to any one of claims 9 to 12 or according to claim 13 further comprising the addition of a coloring agent.

15. Use of the coated fuzzy cotton seeds according to any one of claims 1 to 8 for planting purposes.

## Patentansprüche

1. Flockiger Baumwollsamen, der mit einer wässrigen Polyurethandispersion beschichtet ist.

2. Flockiger Baumwollsamen nach Anspruch 1, wobei die spezifischen Filmparameter der wässrigen Polyurethandispersionen 25-150 MPa für die Zugfestigkeit und 3 bis 30 MPa für 100%-Modul sind.

3. Flockiger Baumwollsamen nach Anspruch 1, wobei die spezifischen Filmparameter der wässrigen Polyurethandispersionen 35-70 MPa für die Zugfestigkeit und 4 bis 20 MPa für 100%-Modul sind.

4. Flockiger Baumwollsamen nach einem der Ansprüche 1 bis 3, wobei die wässrige Polyurethandispersion aus aliphatischen Isocyanaten und Polyolen besteht.

5. Flockiger Baumwollsamen nach einem der Ansprüche 1 bis 4, wobei das Polyurethanpolymer biologisch abbaubar ist.

6. Flockiger Baumwollsamen nach einem der Ansprüche 1 bis 5, der weiterhin eine Agrarchemikalie umfasst.

7. Flockiger Baumwollsamen nach Anspruch 6, wobei die Agrarchemikalie aus der Gruppe bestehend aus fungiziden Mitteln, bakteriziden Mitteln, insektiziden Mitteln und/oder nematiziden Mitteln ausgewählt ist.

8. Flockiger Baumwollsamen nach einem der Ansprüche 1 bis 7, der weiterhin ein Färbemittel, ausgewählt aus der Gruppe bestehend aus Farbstoffen, Pigmenten und Lacken, umfasst.

9. Verfahren zur Beschichtung von flockigen Baumwollsamen, umfassend die folgenden Schritte:
a. Applizieren einer wässrigen Polyurethandispersion auf die Samen;
b. Entfernen der überschüssigen wässrigen Polyurethandispersion;
c. Trocknen der Samen unter ständigem Bewegen, bis ein steifer Film bzw. eine steife Oberfläche entsteht.

10. Verfahren nach Anspruch 9, das weiterhin vor Schritt a. den Schritt des Applizierens einer Emulgatorlösung auf die Samen umfasst.

11. Verfahren nach den Ansprüchen 9 oder 10, wobei die spezifischen Filmparameter der wässrigen Polyurethandispersionen 25-150 MPa für die Zugfestigkeit und 3 bis 30 MPa für 100%-Modul sind.

12. Verfahren nach den Ansprüchen 9 oder 10, wobei die spezifischen Filmparameter der wässrigen Polyurethandispersionen 35-70 MPa für die Zugfestigkeit und 4 bis 20 MPa für 100%-Modul sind.

13. Verfahren nach einem der Ansprüche 9 bis 12, das weiterhin das Versetzen mit einem landwirtschaftlichen Mittel umfasst.

14. Verfahren nach einem der Ansprüche 9 bis 12 oder nach Anspruch 13, das weiterhin das Versetzen mit einem Färbemittel umfasst.

15. Verwendung der beschichteten flockigen Baumwollsamen nach einem der Ansprüche 1 bis 8 für Pflanzzwecke.

## Revendications

1. Graine de coton duveteuse enrobée avec une dispersion aqueuse de polyuréthane.

2. Graine de coton duveteuse selon la revendication 1, les paramètres de film spécifiques des dispersions aqueuses de polyuréthane étant de 25 à 150 MPa pour la résistance à la traction et de 3 à 30 MPa pour le module à 100%.

3. Graine de coton duveteuse selon la revendication 1, les paramètres de film spécifiques des dispersions aqueuses de polyuréthane étant de 35 à 70 MPa pour la résistance à la traction et 4 à 20 MPa pour le module à 100 %.

4. Graine de coton duveteuse selon l'une quelconque des revendications 1 à 3, ladite dispersion aqueuse de polyuréthane étant constituée d'isocyanates aliphatiques et de polyols.

5. Graine de coton duveteuse selon l'une quelconque des revendications 1 à 4, ledit polymère de polyuréthane étant biodégradable.

6. Graine de coton duveteuse selon l'une quelconque des revendications 1 à 5, comprenant en outre une substance agrochimique.

7. Graine de coton duveteuse selon la revendication 6, ladite substance agrochimique étant choisie dans le groupe constitué d'agents fongicides, agents bactéricides, agents insecticides et/ou agents nématicides.

8. Graine de coton duveteuse selon l'une quelconque des revendications 1 à 7, comprenant en outre un agent colorant choisi dans le groupe constitué de colorants, pigments, et laques.

9. Procédé pour enrober des graines de coton duveteuses, comprenant les étapes consistant à
a. appliquer une dispersion aqueuse de polyuréthane sur lesdites graines ;
b. éliminer l'excès de dispersion aqueuse de polyuréthane ;
c. sécher les graines sous mouvement constant jusqu'à ce qu'un film et une surface rigides soient obtenus.

10. Procédé selon la revendication 9, comprenant en outre, avant l'étape a., l'étape d'application d'une solution d'émulsifiant sur lesdites graines.

11. Procédé selon les revendications 9 ou 10 dans lequel les paramètres de film spécifiques des dispersions aqueuses de polyuréthane sont de 25 à 150 MPa pour la résistance à la traction et de 3 à 30 MPa pour le module à 100 %.

12. Procédé selon les revendications 9 ou 10, les paramètres de film spécifiques des dispersions aqueuses de polyuréthane étant de 35 à 70 MPa pour la résistance à la traction et de 4 à 20 MPa pour le module à 100 %.

13. Procédé selon l'une quelconque des revendications 9 à 12 comprenant en outre l'ajout d'un agent agrochimique.

14. Procédé selon l'une quelconque des revendications 9 à 12 ou selon la revendication 13 comprenant en outre l'ajout d'un agent colorant.

15. Utilisation des graines de coton duveteuses enrobées selon l'une quelconque des revendications 1 à 8 pour des applications de plantation.
